# FASCICULE DE BREVET EUROPEEN

(11) **EP 3 514 401 B1**
(45) Date de publication et mention de la délivrance du brevet: **09.09.2020**
(21) Numéro de dépôt: 19152818.1
(22) Date de dépôt: 21.01.2019
(51) Int. Cl.: F16D 23/14

(54) **MONTAGE D'UNE BUTÉE D'EMBRAYAGE AUTOUR D'UN ARBRE D'UNE BOÎTE DE VITESSES D'UN VÉHICULE AUTOMOBILE**
MONTAGE EINES KUPPLUNGSLAGERS AUF EINE WELLE EINES SCHALTGETRIEBES EINES KRAFTFAHRZEUGS
MOUNTING OF A THROW-OUT BEARING ON A SHAFT OF A MOTOR VEHICLE GEARBOX

(30) Priorité: 22.01.2018 FR 1850490
(43) Date de publication de la demande: 24.07.2019
(73) Titulaire: NTN-SNR Roulements, 74000 Annecy (FR)
(72) Inventeur: SCHMIT, François, 73420 Drumettaz Clarafond (FR)
(74) Mandataire: Sayettat, Julien Christian

(56) Documents cités:
- FR-A1- 2 465 119
- FR-A1- 2 540 950
- FR-A1- 2 559 861
- FR-A1- 2 934 025

## Description

L'invention concerne un montage d'une butée d'embrayage autour d'un arbre d'une boîte de vitesses d'un véhicule automobile, ainsi qu'un système d'actionnement de l'embrayage d'un véhicule automobile comprenant un diaphragme, un tel montage de butée et un dispositif de déplacement axial de ladite butée relativement audit diaphragme.

En particulier, le dispositif de déplacement axial de la butée peut être à commande hydraulique, notamment au moyen d'un piston, comme par exemple les dispositifs dénommés à commande concentrique hydraulique.

La butée présente une bague tournante et une bague fixe pourvues chacune d'une piste de roulement formant entre elles un chemin de roulement dans lequel des corps roulants sont disposés pour guider la rotation de ladite bague tournante.

En particulier, notamment pour des raisons d'encombrement du dispositif à commande hydraulique, les butées d'embrayage utilisées dans de tels systèmes comprennent une bague extérieure tournante autour d'une bague intérieure fixe en rotation, ladite bague extérieure étant solidaire d'un organe d'actionnement du diaphragme de l'embrayage par appui sensiblement axial dudit organe sur ledit diaphragme.

Par ailleurs, la bague intérieure est montée sur le dispositif de déplacement par l'intermédiaire d'un support annulaire d'association, afin d'être déplacée en translation axiale par l'intermédiaire dudit dispositif. Pour ce faire, le support d'association présente une couronne d'appui sur laquelle une couronne de montage solidaire de la bague intérieure est disposée en appui axial, tout en permettant un déplacement radial de la butée par rapport audit support.

Ainsi, la translation réversible de l'arbre permet l'actionnement du diaphragme par l'intermédiaire de la butée, entre une position d'embrayage dans laquelle l'organe d'actionnement est disposé contre le diaphragme et une position de débrayage dans laquelle ledit organe appuie sur ledit diaphragme.

Toutefois, dans les applications embrayage, le diaphragme monté sur l'ensemble côté moteur et l'arbre primaire de la boîte de vitesses ne sont pas parfaitement coaxiaux.

Pour assurer la fonction d'autocentrage du diaphragme par rapport à l'arbre, il est connu d'utiliser une rondelle qui est disposée pour exercer un effort axial sur la couronne de montage contre la couronne d'appui, de sorte à générer un effort d'autocentrage de la butée sur le support, et donc sur l'arbre.

En particulier, la rondelle d'autocentrage présente une paroi arrière disposée en appui axial sur une paroi avant de la couronne de montage et une portée en appui sur une portée complémentaire du support de sorte à mettre en contrainte axiale une paroi arrière de la couronne de montage contre une paroi avant de la couronne d'appui.

On connaît des rondelles d'autocentrage dont la portée d'appui est formée par des dents qui sont équiréparties angulairement sur leur circonférence, de telles rondelles étant disposées sur le support d'association par emmanchement en force, de sorte que lesdites dents se déforment pour passer autour de la portée complémentaire dudit support.

On connaît également des rondelles d'autocentrage à ressort, dites « Belleville », présentant une élasticité axiale entre leurs bords intérieur et extérieur formant respectivement la portée d'appui sur la portée complémentaire et la paroi arrière d'appui sur la couronne de montage.

Le document FR2 465 119 A1 montre une solution comme dans le paragraphe ci-dessus où la rondelle pourrait également être troncoconique.

De façon avantageuse, les rondelles Belleville présentent une dimension axiale réduite qui permet de limiter l'encombrement axial du système d'autocentrage, et donc de la butée, ce qui s'avère particulièrement important du fait des exigences de compacité axiale actuellement requises pour les butées d'embrayage. En outre, les rondelles Belleville sont plus simples à réaliser que les rondelles à dents, et présentent par conséquent un coût moins élevé.

Toutefois, cette solution présente quelques inconvénients. En effet, la rondelle Belleville est disposée en appui arrière sur la couronne de montage par l'intermédiaire de son bord extérieur, qui forme une arête. De ce fait, la rondelle peut s'enfoncer dans la couronne ou interagir avec les défauts de surface de ladite couronne, ce qui peut avoir un impact négatif sur la stabilité de l'effort d'autocentrage, voire entraîner un blocage du système d'autocentrage.

En outre, la disposition d'une rondelle Belleville s'avère relativement complexe à mettre en œuvre, en ce qu'elle nécessite deux étapes, à savoir la mise en place de ladite rondelle sur le support d'association, puis le sertissage dudit support pour former la portée complémentaire en conférant l'effort d'autocentrage attendu, ce qui augmente les coûts de fabrication de la butée.

Enfin, du fait de la conicité nécessaire à son élasticité axiale entre ses bords intérieur et extérieur, l'encombrement axial de la rondelle Belleville demeure contraignant.

L'invention vise à résoudre les problèmes de l'art antérieur en proposant notamment un montage d'une butée d'embrayage présentant une compacité axiale améliorée, tout en bénéficiant d'une fonction d'autocentrage optimale et d'une facilité d'assemblage.

A cet effet, et selon un premier aspect, l'invention propose un montage d'une butée d'embrayage autour d'un arbre d'une boîte de vitesses d'un véhicule automobile, ledit montage comprenant :
- une butée présentant une bague tournante et une bague fixe pourvues chacune d'une piste de roulement formant entre elles un chemin de roulement dans lequel des corps roulants sont disposés pour guider la rotation relative desdites bagues, la bague tournante étant solidaire d'un organe d'actionnement du diaphragme de l'embrayage par appui sensiblement axial dudit organe sur ledit diaphragme ;
- un support annulaire d'association de la butée sur l'arbre, ledit support présentant une couronne d'appui sur laquelle une couronne de montage solidaire de la bague fixe est disposée en permettant un déplacement radial de ladite butée par rapport audit support,
- une rondelle d'autocentrage de la butée sur l'arbre, ladite rondelle présentant une paroi arrière en appui axial sur une paroi avant de la couronne de montage et une portée en appui sur une portée complémentaire du support de sorte à mettre en contrainte axiale une paroi arrière de la couronne de montage contre une paroi avant de la couronne d'appui ;
la rondelle étant déformable élastiquement entre un état stable dans lequel la portée présente une dimension intérieure nominale et un état contraint dans lequel la portée présente une dimension intérieure augmentée, la portée et/ou la portée complémentaire étant formée sur une surface de géométrie tronconique qui est agencée pour maintenir la rondelle en état contraint par appui de ladite portée sur ladite portée complémentaire, de sorte à transformer l'effort radial de retour en état stable de ladite rondelle en effort axial d'appui sur ladite rondelle.

Selon un deuxième aspect, l'invention propose un système d'actionnement de l'embrayage d'un véhicule automobile comprenant un diaphragme, ledit système comprenant un tel montage avec une butée qui est montée sur un dispositif de déplacement axial de ladite butée entre une position d'embrayage dans laquelle l'organe d'actionnement est disposé contre le diaphragme et une position de débrayage dans laquelle ledit organe d'actionnement appuie sur ledit diaphragme.

D'autres objets et avantages de l'invention apparaîtront dans la description qui suit, faite en référence aux figures annexées, dans lesquelles :
- les figures 1 et 2 sont des vues partielles en coupe longitudinale d'un montage selon respectivement un mode de réalisation de l'invention, les figures 1a et 2a représentant un agrandissement respectivement de la figure 1 et de la figure 2 focalisé sur la rondelle d'autocentrage ;
- la figure 3 est une représentation en vue de face d'une rondelle d'autocentrage utilisée pour les montages des figures 1 et 2.

En relation avec les figures, on décrit ci-dessous un montage d'une butée d'embrayage autour d'un arbre (non représenté) d'une boîte de vitesses d'un véhicule automobile, ladite butée étant notamment destinée à être intégrée dans un système d'actionnement de l'embrayage d'un véhicule automobile comprenant un diaphragme (non représenté).

Dans une telle réalisation, le débrayage est réalisé par appui sur le diaphragme par l'intermédiaire de la butée. Pour ce faire, le système d'actionnement comprend un dispositif de déplacement axial de la butée entre une position d'embrayage et la position de débrayage.

La butée d'embrayage présente une bague tournante 1 et une bague fixe 2, chacune desdites bagues étant pourvue d'une piste de roulement 3, 4 formant entre elles un chemin de roulement dans lequel un anneau de corps roulants 5 montés dans une cage de rétention 6 est disposé pour guider la rotation de ladite bague tournante par rapport à ladite bague fixe.

Dans le mode de réalisation représenté, la bague extérieure 1 est tournante autour d'une bague intérieure 2 qui est fixe en rotation, lesdites bagues étant réalisées en tôle emboutie pour présenter chacune une piste de roulement 3, 4. Toutefois, la configuration inverse peut être envisagée, c'est-à-dire une bague intérieure tournante dans une bague extérieure fixe.

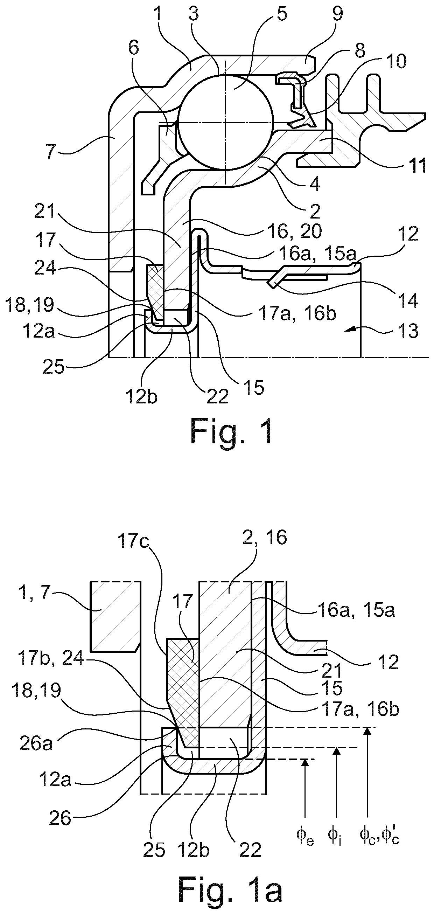

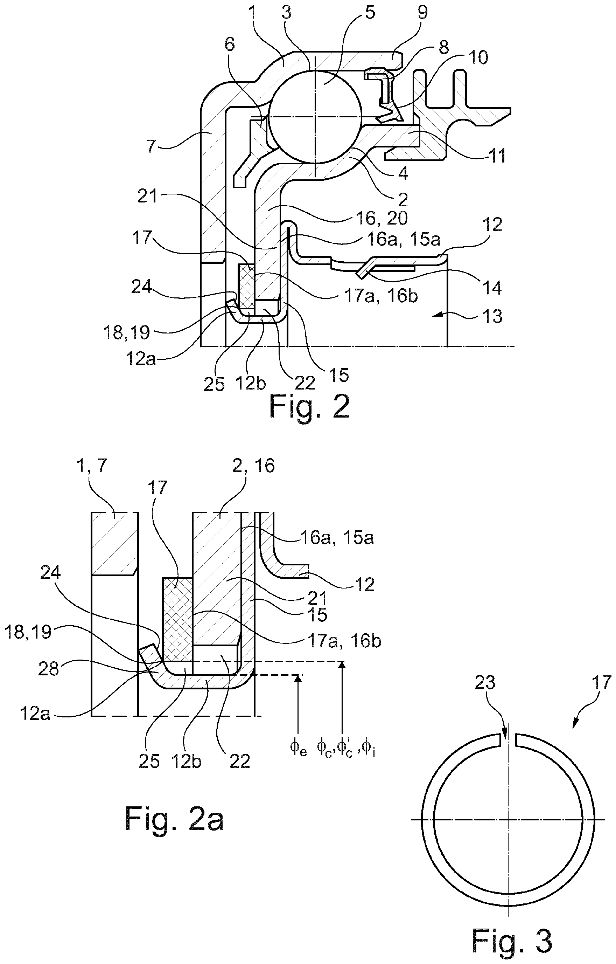

Dans la description, les termes de positionnement dans l'espace sont pris en référence à l'axe de rotation de la butée (horizontal sur les figures 1 et 2, qui montrent un côté de la coupe, l'autre côté étant symétrique par rapport audit axe). En particulier, le terme « intérieur » est relatif à une disposition proche de cet axe et le terme « extérieur » est relatif à une disposition à distance de cet axe. Par ailleurs, les termes « avant » et « arrière » sont relatifs à une disposition par rapport au sens de déplacement de la butée vers la position de débrayage, à savoir à gauche sur les figures 1 et 2 pour « avant » et à droite pour « arrière ». La bague extérieure 1 est solidaire d'un organe d'actionnement 7 du diaphragme de l'embrayage par appui sensiblement axial dudit organe sur ledit diaphragme. Dans les modes de réalisation représentés, l'organe d'actionnement 7 est formé par une extension radiale de la bague extérieure 1 qui s'étend intérieurement. Ainsi, en position d'embrayage, l'organe d'actionnement 7 peut être disposé contre le diaphragme sans exercer un effort significatif d'appui pour le débrayage et, en position de débrayage, l'organe d'actionnement 7 appuie sur ledit diaphragme.

En variante non représentée, l'organe d'actionnement 7 peut être rapporté sur la bague extérieure 1, notamment sous la forme d'un insert réalisé en un matériau adapté pour limiter l'usure et le bruit qui sont occasionnés par l'appui sur le diaphragme, par exemple à base d'un matériau polymérique, notamment thermodurcissable.

Le chemin de roulement réalisé entre les pistes 3, 4 est à contact oblique dans le sens d'application de l'effort de déplacement de la butée en position de débrayage. Par ailleurs, des corps roulants 5 formés de billes sont disposés pour guider la rotation de la bague extérieure 1 par rapport à la bague intérieure 2 et transmettre les efforts exercés sur chacune des bagues 1, 2, lesdites billes étant équiréparties dans le chemin de roulement par l'intermédiaire de la cage 6.

La butée représentée comprend également un dispositif d'étanchéité d'un côté du chemin de roulement, notamment du côté arrière qui est opposé à l'organe d'actionnement 7, pour limiter les fuites de lubrifiant présent dans le chemin de roulement ainsi que la contamination dudit chemin avec des polluants extérieurs.

Sur les figures 1 et 2, le dispositif d'étanchéité est associé à la bague extérieure 1 pour s'étendre au moins en partie entre les bagues 1, 2 en étant disposé axialement en regard de l'anneau de corps roulants 5. Le dispositif d'étanchéité comprend une armature rigide 8, par exemple réalisée en tôle emboutie, qui présente une paroi annulaire radiale refermant au moins en partie le côté du chemin de roulement, ladite paroi étant prolongée extérieurement par une paroi annulaire axiale qui est associée par emmanchement sur une portée annulaire axiale 9 de la bague extérieure 1.

Dans les modes de réalisation représentés, l'armature 8 est équipée d'un élément 10 réalisé en matériau souple, par exemple en élastomère, qui est fixé à ladite armature notamment par surmoulage. L'élément souple 10 présente au moins une lèvre qui s'étend intérieurement depuis la portée radiale de l'armature 8 en présentant une interférence d'étanchéité avec une paroi axiale 11 de la bague intérieure 2.

La bague 2 fixe en rotation est destinée à être déplacée en translation axiale par l'intermédiaire d'un piston hydraulique du dispositif de déplacement. Pour ce faire, la bague intérieure 2 est disposée autour d'un support annulaire 12 d'association de la butée autour d'un arbre qui est déplaçable en translation par l'intermédiaire d'un tel piston, ledit arbre faisant partie dudit piston ou étant disposé en bout dudit piston. Dans les modes de réalisation représentés, le support 12 comprend un logement axial 13 dans lequel l'extrémité de l'arbre peut être disposée, ledit logement étant pourvu de griffes 14 afin d'assurer la retenue.

Le support 12 présente une couronne d'appui 15 sur laquelle une couronne de montage 16 solidaire de la bague fixe 2 est disposée en permettant un déplacement radial de ladite butée par rapport audit support. Dans les modes de réalisation représentés, la bague fixe 2 comprend une extension radiale qui s'étend intérieurement pour former la couronne de montage 16, la paroi arrière 16a de ladite couronne de montage étant en appui sur la paroi avant 15a de la couronne d'appui, qui peut notamment être formée par emboutissage du support annulaire 12.

Pour compenser les défauts de coaxialité entre le diaphragme et l'arbre, le montage comprend en outre une rondelle 17 d'autocentrage de la butée sur l'arbre, par l'intermédiaire de laquelle la bague intérieure 2 est montée sur le support 12, de sorte à générer l'effort d'autocentrage entre ledit support et ladite bague intérieure.

La rondelle 17 présente une paroi arrière 17a en appui axial sur une paroi avant 16b de la couronne de montage 16 et une portée 18 en appui sur une portée complémentaire 19 du support 12, de sorte à mettre en contrainte axiale une paroi arrière 16a de la couronne de montage 16 contre une paroi avant 15a de la couronne d'appui 15.

Dans les modes de réalisation représentés, la couronne de montage 16 de la bague intérieure 2 présente une portion extérieure 20 et une portion intérieure 21, ladite portion intérieure présentant une paroi avant 16b sur laquelle la paroi arrière 17b de la rondelle 17 est en appui axial et une paroi arrière 16a qui est en appui axial sur la paroi avant 15a de la couronne d'appui 15.

Par ailleurs, le support d'association 12 comprend une saillie 12a sur laquelle est formée la portée complémentaire 19. En particulier, le support d'association 12 comprend une portion cylindrique 12b qui prolonge la couronne d'appui 15, la saillie 12a étant formée par un repli extérieur du bord libre de ladite portion cylindrique. Un tel repli peut par exemple être formé par emboutissage du support d'association 12.

De façon avantageuse, la paroi arrière 17a de la rondelle 17 s'étend sensiblement radialement en étant en appui axial sur une paroi avant 16b sensiblement radiale de la couronne de montage 16. Ainsi, la rondelle 17 vient en appui à plat contre la couronne de montage 16, ce qui permet d'améliorer la compacité axiale du système d'autocentrage, et donc la compacité axiale de la butée. Pour les mêmes raisons, la paroi arrière 16a de la couronne de montage 16 et la paroi avant 15a de la couronne d'appui 15 peuvent également s'étendre sensiblement radialement.

Ainsi, par mise en appui de la couronne de montage 16 sur le support d'association 12, un effort axial d'autocentrage est établi entre la bague intérieure 2 et ledit support d'association. Par ailleurs, un jeu radial 22 est formé entre la portion cylindrique 12b et l'extrémité intérieure de la couronne de montage 16, de sorte à permettre l'autocentrage par déplacement radial de la bague intérieure 2 relativement au support 12, et donc à l'arbre.

La rondelle 17 est déformable élastiquement entre un état stable, dans lequel la portée 18 présente une dimension intérieure nominale, comme représenté sur la figure 3, et un état contraint, comme représenté sur les figures 1 et 2, dans lequel la portée 18 présente une dimension intérieure φ_{c} augmentée. Pour ce faire, la rondelle 17 peut présenter une géométrie annulaire interrompue par une fente 23 permettant sa déformation, comme représenté sur la figure 3.

Ainsi, la rondelle 17 peut être facilement disposée sur le support 12, notamment en une seule opération consistant à la déformer radialement pour augmenter sa dimension intérieure, afin de permettre son passage au-delà de la saillie 12a, puis son positionnement autour de la portion cylindrique 12b et en appui sur la portée complémentaire 19 par retour élastique.

La portée 18 de la rondelle 17 et/ou la portée complémentaire 19 du support 12 est formée sur une surface 24 de géométrie tronconique qui est agencée pour maintenir la rondelle 17 en étant contraint par appui de ladite portée sur ladite portée complémentaire, de sorte à transformer l'effort radial de retour en état stable de ladite rondelle en effort axial d'appui sur ladite rondelle.

Pour ce faire, la portée complémentaire 19 peut présenter un diamètre φ_{c}' qui est supérieur à la dimension intérieure nominale de la portée 18. Ainsi, lors de la disposition de la rondelle 17 sur le support 12, la mise en appui de la portée 18 sur la portée complémentaire maintient ladite rondelle dans un état contraint avec une dimension intérieure augmentée φ_{c} qui est sensiblement égale au diamètre φ_{c}'.

En outre, le diamètre φ_{c}' est agencé de sorte à maintenir la rondelle 17 avec un diamètre intérieur φᵢ qui est supérieur au diamètre extérieur φₑ de la portion cylindrique 12b. Ainsi, un jeu radial 25 est formé entre la portion cylindrique 12b et la portée 18 en appui, afin de maintenir la rondelle 17 en contrainte radiale qui est transformée en effort axial d'appui contre la couronne de montage 16 du fait de la conicité des portées 18, 19.

Le contact conique entre la portée 18 et la portée complémentaire 19 permet de réduire la dimension axiale de la rondelle 17, et ainsi d'améliorer la compacité axiale du système d'autocentrage, et donc la compacité axiale de la butée, tout en assurant une fonction d'autocentrage satisfaisante.

Sur les figures 1 et 1a, la rondelle 17 présente une paroi avant tronconique 17b qui est en appui sur une paroi arrière 26 sensiblement radiale du support 12. En particulier, la rondelle 17 présente une surface avant formée d'une paroi extérieure 17c sensiblement radiale entourant une paroi intérieure tronconique 17b sur laquelle est formée la portée 18. De même, la paroi arrière 26 est formée sur la saillie 12a, et présente un bord extérieur arrière 26a sur lequel est formée la portée complémentaire 19.

Sur les figures 2 et 2a, le support 12 présente une portée complémentaire 19 tronconique sur laquelle la portée 18 de la rondelle 17 est en appui. En particulier, une telle portée tronconique 19 peut être obtenue en réalisant la saillie 12a, par exemple par emboutissage, de manière à ce que ladite saillie s'étende extérieurement en formant un angle aigu non nul avec la direction radiale. En outre, la rondelle 17 présente un bord intérieur avant 28 sur lequel est formée la portée 18.

## Revendications

1. Montage d'une butée d'embrayage autour d'un arbre d'une boîte de vitesses d'un véhicule automobile, ledit montage comprenant :
- une butée présentant une bague tournante (1) et une bague fixe (2) pourvues chacune d'une piste de roulement (3, 4) formant entre elles un chemin de roulement dans lequel des corps roulants (5) sont disposés pour guider la rotation relative desdites bagues, la bague tournante (1) étant solidaire d'un organe (7) d'actionnement du diaphragme de l'embrayage par appui sensiblement axial dudit organe sur ledit diaphragme ;
- un support annulaire (12) d'association de la butée sur l'arbre, ledit support présentant une couronne d'appui (15) sur laquelle une couronne de montage (16) solidaire de la bague fixe (2) est disposée en permettant un déplacement radial de ladite butée par rapport audit support,
- une rondelle (17) d'autocentrage de la butée sur l'arbre, ladite rondelle présentant une paroi arrière (17a) en appui axial sur une paroi avant (16b) de la couronne de montage (16) et une portée (18) en appui sur une portée complémentaire (19) du support (12) de sorte à mettre en contrainte axiale une paroi arrière (16a) de la couronne de montage (16) contre une paroi avant (15a) de la couronne d'appui (15) ;
dans ledit montage la rondelle (17) est déformable élastiquement entre un état stable dans lequel la portée (18) présente une dimension intérieure nominale et un état contraint dans lequel la portée (18) présente une dimension intérieure augmentée (φ_{c}), et en ce que la portée (18) et/ou la portée complémentaire (19) est formée sur une surface (24) de géométrie tronconique qui est agencée pour maintenir la rondelle (17) en état contraint par appui de ladite portée sur ladite portée complémentaire, ledit montage étant **caractérisé en ce que** la rondelle (17) est déformable élastiquement de sorte à transformer l'effort radial de retour en état stable de ladite rondelle en effort axial d'appui sur ladite rondelle.

2. Montage selon la revendication 1, **caractérisé en ce que** le diamètre (φ_{c}') de la portée complémentaire (19) est supérieur à la dimension intérieure nominale de la portée (18).

3. Montage selon l'une des revendications 1 ou 2, **caractérisé en ce que** la portée complémentaire (19) est formée sur une saillie (12a) du support (12).

4. Montage selon la revendication 3, **caractérisé en ce que** la couronne d'appui (15) est prolongée par une portion cylindrique (12b), la saillie (12a) étant formée par un repli extérieur du bord libre de ladite portion cylindrique.

5. Montage selon la revendication 4, **caractérisé en ce qu'**un jeu radial (25) est formé entre la portion cylindrique (12b) et la portée (18) en appui.

6. Montage selon l'une quelconque des revendications 1 à 5, **caractérisé en ce que** la rondelle (17) présente une paroi avant tronconique (17b) qui est en appui sur une paroi arrière (26) sensiblement radiale du support (12).

7. Montage selon la revendication 6, **caractérisé en ce que** la rondelle (17) présente une surface avant formée d'une paroi extérieure (17c) sensiblement radiale entourant une paroi intérieure (17b) tronconique.

8. Montage selon l'une quelconque des revendications 1 à 5, **caractérisé en ce que** le support (12) présente une portée complémentaire (19) tronconique sur laquelle la portée (18) de la rondelle (17) est en appui.

9. Montage selon la revendication 8, **caractérisé en ce que** la rondelle (17) présente un bord intérieur avant (28) sur lequel la portée (18) est formée.

10. Montage selon l'une quelconque des revendications 1 à 9, **caractérisé en ce que** la paroi arrière (16a) de la couronne de montage (16) et la paroi avant (15a) de la couronne d'appui (15) s'étendent sensiblement radialement.

11. Montage selon l'une quelconque des revendications 1 à 10, **caractérisé en ce que** la paroi arrière (17a) de la rondelle (17) s'étend sensiblement radialement en étant en appui axial sur une paroi avant (16b) sensiblement radiale de la couronne de montage (16).

12. Montage selon l'une quelconque des revendications 1 à 11, **caractérisé en ce que** la rondelle (17) présente une géométrie annulaire qui est interrompue par une fente (23) permettant sa déformation.

13. Système d'actionnement de l'embrayage d'un véhicule automobile comprenant un diaphragme, ledit système comprenant un montage d'une butée selon l'une quelconque des revendications 1 à 12 qui est montée sur un dispositif de déplacement axial de ladite butée entre une position d'embrayage dans laquelle l'organe d'actionnement (7) est disposé contre le diaphragme et une position de débrayage dans laquelle ledit organe d'actionnement appuie sur ledit diaphragme.

## Patentansprüche

1. Montage eines Kupplungslagers um eine Welle eines Getriebes eines Kraftfahrzeugs, wobei die Montage umfasst:
- ein Lager, das einen drehenden Ring (1) und einen feststehenden Ring (2) aufweist, die jeweils mit einer Rollbahn (3, 4) versehen sind, die zwischen sich einen Rollweg bilden, in dem Rollkörper (5) angeordnet sind, um die Drehung der Ringe zueinander zu leiten, wobei der drehende Ring (1) mit einem Betätigungsorgan (7) der Kupplungsmembran, durch im Wesentlichen axiales Anlegen des Organs an die Membran, fest verbunden ist;
- eine ringförmige Stütze (12) für den Verbund des Lagers auf der Welle, wobei die Stütze einen Anlegekranz (15) aufweist, auf dem ein Montagekranz (16), der fest mit dem feststehenden Ring (2) verbunden ist, anageordnet ist, wodurch eine radiale Verschiebung des Lagers in Bezug auf die Stütze ermöglicht wird,
- eine Selbstzentrierungsscheibe (17) des Lagers auf der Welle, wobei die Scheibe eine rückwärtige Wand (17a) in axialer Anlage an einer vorderen Wand (16b) des Montagekranzes (16) und eine Auflagefläche (18) auf Anlage an einer ergänzenden Auflagefläche (19) der Stütze (12) aufweist, um eine rückwärtige Wand (16a) des Montagekranzes (16) an einer vorderen Wand (15a) des Anlegekranzes (15) in axiale Spannung zu versetzen;
wobei die Scheibe (17) in der Montage elastisch zwischen einem stabilen Zustand, in dem die Auflagefläche (18) eine nominale Innenabmessung aufweist, und einem gespannten Zustand, in dem die Auflagefläche (18) eine erhöhte Innenabmessung (φ_{c}) aufweist, verformbar ist, und dadurch, dass die Auflagefläche (18) und/oder die ergänzende Auflagefläche (19) auf einer Oberfläche (24) mit einer Kegelstumpfgeometrie gebildet ist, die angeordnet ist, um die Scheibe (17) durch Anlegen der Auflagefläche an der ergänzenden Auflagefläche im gespannten Zustand zu halten, wobei die Montage **dadurch gekennzeichnet** ist, die Scheibe (17) elastisch verformbar ist, um die radiale Rückstellkraft im stabilen Zustand der Scheibe in eine axiale Anlegekraft auf der Scheibe umzuwandeln.

2. Montage nach Anspruch 1, **dadurch gekennzeichnet, dass** der Durchmesser (φ_{c}') der ergänzenden Auflagefläche (19) größer als die nominale Innenabmessung der Auflagefläche (18) ist.

3. Montage nach einem der Ansprüche 1 oder 2, **dadurch gekennzeichnet, dass** die ergänzende Auflagefläche (19) durch einen Überstand (12a) der Stütze (12) gebildet wird.

4. Montage nach Anspruch 3, **dadurch gekennzeichnet, dass** der Anlegekranz (15) durch einen zylindrischen Abschnitt (12b) verlängert wird, wobei der Überstand (12a) durch eine äußere Doppelfalte des freien Randes des zylindrischen Abschnitts gebildet wird.

5. Montage nach Anspruch 4, **dadurch gekennzeichnet, dass** ein radiales Spiel (25) zwischen dem zylindrischen Abschnitt (12b) und der auf Anlage befindlichen Auflagefläche (18) gebildet wird.

6. Montage nach einem der Ansprüche 1 bis 5, **dadurch gekennzeichnet, dass** die Scheibe (17) eine kegelstumpfförmige vordere Wand (17b) aufweist, die auf Anlage an einer im Wesentlichen radialen rückwärtigen Wand (26) der Stütze (12) ist.

7. Montage nach Anspruch 6, **dadurch gekennzeichnet, dass** die Scheibe (17) eine vordere Oberfläche aufweist, die aus einer im Wesentlichen radialen Außenwand (17c) gebildet wird, die eine kegelstumpfförmige Innenwand (17b) umgibt.

8. Montage nach einem der Ansprüche 1 bis 5, **dadurch gekennzeichnet, dass** die Stütze (12) eine kegelstumpfförmige ergänzende Auflagefläche (19) aufweist, an der die Auflagefläche (18) der Scheibe (17) anliegt.

9. Montage nach Anspruch 8, **dadurch gekennzeichnet, dass** die Scheibe (17) einen vorderen Innenrand (28) aufweist, auf dem die Auflagefläche (18) gebildet ist.

10. Montage nach einem der Ansprüche 1 bis 9, **dadurch gekennzeichnet, dass** sich die rückwärtige Wand (16a) des Montagekranzes (16) und die vordere Wand (15a) des Anlegekranzes (15) im Wesentlichen radial erstrecken.

11. Montage nach einem der Ansprüche 1 bis 10, **dadurch gekennzeichnet, dass** sich die rückwärtige Wand (17a) der Scheibe (17) im Wesentlichen radial erstreckt, wobei sie in axialer Anlage an einer im Wesentlichen radialen vorderen Wand (16b) des Montagekranzes (16) ist.

12. Montage nach einem der Ansprüche 1 bis 11, **dadurch gekennzeichnet, dass** die Scheibe (17) eine ringförmige Geometrie aufweist, die durch einen Schlitz (23) unterbrochen wird, der deren Verformung ermöglicht.

13. Betätigungssystem einer Kupplung eines Kraftfahrzeugs, eine Membran umfassend, wobei das System eine Montage eines Lagers nach einem der Ansprüche 1 bis 12 umfasst, das auf einer Vorrichtung zur axialen Verschiebung des Lagers zwischen einer Kupplungsposition, in der das Betätigungsorgan (7) an der Membran angeordnet ist, und einer Auskuppelposition, in der das Betätigungsorgan auf die Membran drückt, montiert ist.

## Claims

1. Mounting of a clutch release bearing around a shaft of a motor vehicle gearbox, said mounting comprising:
- a bearing having a rotating ring (1) and a fixed ring (2) each provided with a raceway (3, 4) forming between them a rolling track wherein rolling bodies (5) are disposed to guide the relative rotation of said rings, the rotating ring (1) being integral with an actuating member (7) of the diaphragm of the clutch by an substantially axial bearing of said member on said diaphragm;
- an annular support (12) for associating the bearing on the shaft, said support having a bearing ring (15) whereon a mounting ring (16) integral with the fixed ring (2) is disposed by allowing for a radial movement of said bearing with respect to said support,
- a self-centring washer (17) of the bearing on the shaft, said washer having a rear wall (17a) in axial bearing on a front wall (16b) of the mounting ring (16) and a surface (18) bearing on a complementary surface (19) of the support (12) in such a way as to place in axial stress a rear wall (16a) of the mounting ring (16) against a front wall (15a) of the bearing ring (15);
in said mounting the washer (17) is elastically deformable between a stable state wherein the surface (18) has an inside nominal dimension and a stressed state wherein the surface (18) has an increased inside dimension (φ_{c}), and in that the surface (18) and/or the complementary surface (19) is formed on a surface (24) with a truncated geometry which is arranged to maintain the washer (17) in a stressed state through beating of said surface on said complementary surface, said mounting being **characterised in that** the washer (17) is elastically deformable in such a way as to transform the radial return force in a stable state of said washer into an axial bearing force on said washer.

2. Mounting according to claim 1, **characterised in that** the diameter (φ_{c}') of the complementary surface (19) is greater than the inside nominal dimension of the surface (18) .

3. Mounting according to one of claims 1 or 2, **characterised in that** the complementary surface (19) is formed on a protrusion (12a) from the support (12).

4. Mounting according to claim 3, **characterised in that** the bearing ring (15) is extended by a cylindrical portion (12b), the protrusion (12a) being formed by an exterior fold of the free edge of said cylindrical portion.

5. Mounting according to claim 4, **characterised in that** a radial clearance (25) is formed between the cylindrical portion (12b) and the bearing surface (18).

6. Mounting according to any of claims 1 to 5, **characterised in that** the washer (17) has a truncated front wall (17b) that is bearing on a substantially radial rear wall (26) of the support (12).

7. Mounting according to claim 6, **characterised in that** the washer (17) has a front surface formed from a substantially radial outer wall (17c) surrounding a truncated inner wall (17b).

8. Mounting according to any of claims 1 to 5, **characterised in that** the support (12) has a truncated complementary surface (19) whereon the surface (18) of the washer (17) is bearing.

9. Mounting according to claim 8, **characterised in that** the washer (17) has a front inner edge (28) whereon the surface (18) is formed.

10. Mounting according to any of claims 1 to 9, **characterised in that** the rear wall (16a) of the mounting ring (16) and the front wall (15a) of the bearing ring (15) extend substantially radially.

11. Mounting according to any of claims 1 to 10, **characterised in that** the rear wall (17a) of the washer (17) extends substantially radially by axially bearing against a substantially radial front wall (16b) of the mounting ring (16).

12. Mounting according to any of claims 1 to 11, **characterised in that** the washer (17) has an annular geometry that is interrupted by a slot (23) allowing for the deformation thereof.

13. System for actuating the clutch of a motor vehicle comprising a diaphragm, said system comprising a mounting of a bearing according to any of claims 1 to 12 which is mounted on device for the axial movement of said bearing between a clutch position wherein the actuating member (7) is disposed against the diaphragm and a declutching position wherein said actuating member bears on said diaphragm.
